# FASCICULE DE BREVET EUROPEEN

(11) **EP 1 613 713 B1**
(45) Date de publication et mention de la délivrance du brevet: **17.12.2008**
(21) Numéro de dépôt: 04721220.4
(22) Date de dépôt: 17.03.2004
(51) Int. Cl.: C10H 21/00, C07C 7/148, C07C 11/24, B01J 19/24

(54) **PROCEDE DE PREPARATION D ACETYLENE ET INSTALLATION POUR LA MISE EN OEUVRE DU PROCEDE**
VERFAHREN ZUR HERSTELLUNG VON ACETYLEN UND ANLAGE ZUR DURCHFÜHRUNG DES VERFAHRENS
METHOD FOR PRODUCTION OF ACETYLENE AND PLANT FOR CARRYING OUT SAID METHOD

(30) Priorité: 04.04.2003 FR 0304194
(43) Date de publication de la demande: 11.01.2006
(73) Titulaire: L'AIR LIQUIDE, Société Anonyme pour l'Etude et l'Exploitation des Procédés Georges Claude, 75007 Paris (FR)
(72) Inventeur: DELCORSO, Fabrice, F-78350 JOUY-EN-JOSAS (FR); CAMPO, Philippe, F-78180 MONTIGNY-LE-BRETONNEUX (FR)
(74) Mandataire: Conan, Philippe Claude
(86) Numéro de dépôt international: PCT/FR2004/050113
(87) Numéro de publication internationale: WO 2004/090073

(56) Documents cités:
- EP-A- 0 034 572
- DD-A- 271 106
- US-A- 2 343 185
- US-A- 2003 040 654

## Description

L'invention a pour objet un procédé de production d'acétylène sans oxygène.

L'acétylène est produit industriellement par craquage d'hydrocarbures ou par hydrolyse de carbure de calcium. Un tel procédé est décrit dans la demande de brevet européen EP 0 034 572 A, le brevet des Etats-Unis d'Amérique US 2 343 185, et la demande de brevet allemand DD 271 106 A. La demande de brevet des Etats-Unis d'Amérique US 2003/0208958 A1 divulgue une installation et un procédé de production d'acétylène par hydrolyse du carbure de calcium dans lequel le carbure de calcium est mélangé avec un sel basique permettant de rendre les sédiments plus faciles à pomper. Cependant, dans l'hydrolyse de carbure calcium, la teneur en oxygène dans l'acétylène produit atteint jusqu'à 350 ppm et elle est souvent comprise entre 50 ppm et 200 ppm. Cet oxygène provient de l'eau utilisée dans la réaction suivante :

CaC₂+2H₂O → C₂H₂ + Ca(OH)₂

En effet à 15°C, la concentration en oxygène dans l'eau est environ de 10 milligrammes par litre. La production d'acétylène exempt d'oxygène implique l'élimination de l'oxygène dissous dans l'eau utilisée dans la réaction en s'assurant de ne pas y introduire à la place, de composés incompatibles avec les produits de la réaction qu'il s'agisse de l'acétylène ou de l'hydroxyde de calcium. Dans le cadre de ses recherches pour mettre au point un procédé de production d'acétylène, exempt d'oxygène, la demanderesse a trouvé une méthode simple pour éliminer l'oxygène de l'eau utilisée dans ce procédé.

C'est pourquoi selon un premier aspect, l'invention a pour objet un procédé de préparation d'acétylène par hydrolyse de carbure de calcium caractérisé en ce qu'il comprend une étape préalable (a), d'addition dans l'eau, d'un sel hydrosoluble réducteur apte à réagir avec l'oxygène dissous. Par sel hydrosoluble réducteur on, désigne plus particulièrement tout sel apte à réagir avec l'oxygène dissout par une réaction d'oxydoréduction. Il s'agit plus particulièrement de sels hydrosolubles de métaux alcalins, comme les sels de sodium, de potassium ou de lithium ou de sels de métaux alcalino-terreux comme les sels de calcium ou de magnésium. Il s'agit de préférence de sels de soufre tels que par exemple les sulfite (SO₃²⁻) hydrogénosulfite (HSO₃⁻), thiosulfate (S₂O₃²⁻), sulfure (S²⁻) ou hydrogénosulfure (HS⁻).

Dans le procédé tel que défini précédemment, le sel hydrosoluble est de préférence un hydrogénosulfite comme par exemple, le bisulfite de sodium ou le bisulfite de potassium.

Ce sel hydrosoluble se transforme au contact de l'oxygène dissout dans l'eau et pH supérieur à 7 en hydrogénosulfate selon la réaction :

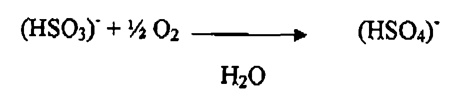

Selon un premier aspect particulier du procédé tel que défini précédemment, l'étape (a) est réalisée dans une eau ayant une température comprise entre 0°C et 100°C, plus particulièrement entre 5°C et 80°C et tout particulièrement entre environ 50°C et 60°C.

Selon un deuxième aspect particulier du procédé tel que défini précédemment, l'hydrogénosulfite est ajouté en excès.

Par excès, on entend dans le cadre de la présente invention, un excès allant jusqu'à environ 3 fois la quantité stoechiométrique. Selon un aspect plus particulier, on met en oeuvre le procédé par addition d'un léger excès de sel hydrosoluble c'est à dire en en ajoutant jusqu'à 20 % au-dessus de la quantité stoechiométrique, le plus souvent entre 10 % et 15 %.

Ainsi, lorsque l'eau utilisée dans le procédé contient 10 mg/l d'oxygène dissout, la quantité stoechiométrique de bisulfite de sodium nécessaire à l'élimination de l'oxygène est égale à environ 16,6 mg/l ; on ajoute dans ce cas dans l'eau, environ 19 mg/l de bisulfite de sodium.

On peut cependant aussi travailler avec un fort excès de sel hydrosoluble jusqu'à environ 3 fois la quantité stoechiométrique.

Selon un troisième aspect particulier du procédé tel que décrit précédemment, la quantité d'hydrogénosulfite ajoutée à l'eau est ajustée à la concentration en oxygène dans ladite eau.

Selon un quatrième aspect particulier du procédé tel que décrit précédemment, la quantité d'hydrogénosulfite ajoutée à l'eau est ajustée à la concentration en oxygène dans l'acétylène produit.

L'invention a aussi pour objet une installation de production d'acétylène, apte à la mise en oeuvre du procédé tel que défini précédemment, comprenant au moins un réacteur dans lequel est effectuée l'hydrolyse du carbure calcium, au moins une canalisation apte à délivrer de l'eau dans ledit réacteur et au moins une canalisation apte à permettre la sortie de l'acétylène produit dudit réacteur, au moins un réservoir destiné à contenir le sel hydrosoluble réducteur et au moins un moyen apte à doser et à délivrer ledit sel dans l'eau destinée à être délivrée dans ledit réacteur ou dans chacun desdits réacteurs, caractérisée en ce qu'elle comprend aussi au moins un moyen de détermination de la teneur en oxygène dans l'eau circulant de circuit en amont dudit ou desdits réservoirs.

Le ou les moyens aptes à doser et à délivrer le sel hydrosoluble réducteur dans l'eau est, ou sont, de préférence asservis audit ou aux dits moyens de détermination de la teneur en oxygène dans l'eau, par un automate programmable.

Selon un mode particulier, l'installation telle que définie ci-dessus, comprend aussi au moins un moyen de détermination de la teneur en oxygène dans l'acétylène en sortie du réacteur.

Selon ce mode particulier, dans l'installation telle que définie ci-dessus, le ou les moyens aptes à doser et à délivrer le sel hydrosoluble réducteur dans l'eau est, ou sont, de préférence asservis audit ou aux dits moyens de détermination de la teneur en oxygène dans l'acétylène en sortie du réacteur par un automate programmable.

Le procédé selon l'invention permet la production d'acétylène à très faible teneur en oxygène. On a observé, lors d'essais dans une installation industrielle mettant en oeuvre ce procédé, l'acétylène produit contenait moins de 10 ppm d'oxygène.

## Revendications

1. Procédé de préparation d'acétylène par hydrolyse de carbure de calcium **caractérisé en ce qu'**il comprend une étape préalable (a), d'addition dans l'eau, d'un sel hydrosoluble réducteur apte à réagir avec l'oxygène dissous.

2. Procédé tel que défini à la revendication, dans lequel le sel hydrosoluble réducteur est choisi parmi les sels hydrosolubles de métaux alcalins ou de métaux alcalino-terreux.

3. Procédé tel que défini à l'une des revendications 1 ou 2, dans lequel le sel hydrosoluble réducteur est choisis parmi les sulfite (SO₃²⁻), hydrogénosulfite (HSO₃⁻), thiosulfate (S₂O₃²⁻), sulfure (S²⁻) ou hydrogénosulfure (HS⁻).

4. Procédé tel que défini à l'une des revendications 2 ou 3, dans lequel le sel hydrosoluble réducteur est le bisulfite de sodium ou le bisulfite de potassium.

5. Procédé tel que défini à l'une des revendications 1 à 4, dans lequel dans l'étape (a), la quantité d'hydrogénosulfite ajoutée à l'eau, est ajustée à la concentration en oxygène dans ladite eau.

6. Procédé tel que défini à l'une des revendications 1 à 5, dans lequel dans l'étape (a), la quantité d'hydrogénosulfite ajoutée à l'eau, est ajustée à la concentration en oxygène dans l'acétylène produit.

7. Installation de production d'acétylène, apte à la mise en oeuvre du procédé tel que défini à l'une des revendications 1 à 6, comprenant au moins un réacteur dans lequel est effectuée l'hydrolyse du carbure calcium, au moins une canalisation apte à délivrer de l'eau dans ledit réacteur et au moins une canalisation apte à permettre la sortie de l'acétylène produit dudit réacteur, au moins un réservoir destiné à contenir le sel hydrosoluble réducteur, au moins un moyen apte à doser et à délivrer ledit sel dans l'eau destinée à être délivrée dans ledit réacteur ou dans chacun desdits réacteurs, **caractérisée en ce qu'**elle comprend aussi au moins un moyen de détermination de la teneur en oxygène dans l'eau circulant de circuit en amont dudit ou desdits réservoirs.

8. Installation telle que définie à la revendication 7, **caractérisée en ce que** le ou les moyens aptes à doser et à délivrer le sel hydrosoluble réducteur dans l'eau est, ou sont, asservis audit ou aux dits moyens de détermination de la teneur en oxygène dans l'eau, par un automate programmable.

9. Installation telle que définie à l'une des revendications 7 ou 8, **caractérisée en ce qu'**elle comprend aussi au moins un moyen de détermination de la teneur en oxygène dans l'acétylène en sortie du réacteur.

10. Installation telle que définie à la revendication 9, **caractérisée en ce que** le ou les moyens aptes à doser et à délivrer le sel hydrosoluble réducteur dans l'eau est, ou sont, asservis audit ou aux dits moyens de détermination de la teneur en oxygène dans l'acétylène, par un automate programmable.

## Claims

1. Process for the preparation of acetylene by hydrolysis of calcium carbide, **characterized in that** it comprises a preliminary stage (a) of addition to the water of a water-soluble reducing salt capable of reacting with the dissolved oxygen.

2. Process as defined in Claim 1, in which the water-soluble reducing salt is chosen from water-soluble alkali metal or alkaline earth metal salts.

3. Process as defined in either of Claims 1 and 2, in which the water-soluble reducing salt is chosen from sulfite (SO₃²⁻) hydrogensulfite (HSO₃⁻), thiosulfate (S₂O₃²⁻), sulfide (S²⁻) or hydrogensulfide (HS⁻).

4. Process as defined in either of Claims 2 and 3, in which the water-soluble reducing salt is sodium bisulfite or potassium bisulfite.

5. Process as defined in one of Claims 1 to 4, in which, in stage (a), the amount of hydrogensulfite added to the water is adjusted to the concentration of oxygen in said water.

6. Process as defined in one of Claims 1 to 5, in which, in stage (a), the amount of hydrogensulfite added to the water is adjusted to the concentration of oxygen in the acetylene produced.

7. Plant for the production of acetylene, suitable for the implementation of the process as defined in one of Claims 1 to 6, comprising at least one reactor in which the hydrolysis of the calcium carbide is carried out, at, least one pipe capable of delivering water to said reactor, at least one pipe capable of making possible the departure of the acetylene produced from said reactor, at least one tank intended to contain the water-soluble reducing salt and at least one means capable of metering out and of delivering said salt to the water intended to be delivered to said reactor or to each of said reactors, **characterized in that** it also comprises at least one means for determining the content of oxygen in the moving water of the circuit upstream of said tank or tanks.

8. The plant as defined in Claim 7, **characterized in that** the means capable of metering out and of delivering the water-soluble reducing salt to the water is or are subject to the control, via a programmable controller, of said means for determining the content of oxygen in the water.

9. Plant as defined in either of Claims 7 and 8, **characterized in that** it also comprises at least one means for determining the content of oxygen in the acetylene at the outlet of the reactor.

10. Plant as defined in Claim 9, **characterized in that** the means capable of metering out and of delivering the water-soluble reducing salt to the water is or are subject to the control, via a programmable controller, of said means for determining the content of oxygen in the acetylene.

## Patentansprüche

1. Verfahren zur Herstellung von Acetylen durch Hydrolyse von Calciumcarbid, **dadurch gekennzeichnet, dass** es einen vorgeschalteten Schritt (a) der Zugabe eines reduzierenden wasserlöslichen Salzes zu dem Wasser umfasst, das in der Lage ist, mit dem gelösten Sauerstoff zu reagieren.

2. Verfahren wie in Anspruch 1 definiert, wobei das reduzierende wasserlösliche Salz ausgewählt ist aus den wasserlöslichen Salzen der Alkalimetalle oder der Erdalkalimetalle.

3. Verfahren wie in einem der Ansprüche 1 oder 2 definiert, wobei das reduzierende wasserlösliche Salz ausgewählt ist aus Sulfit (SO₃²⁻), Hydrogensulfit (HSO₃⁻) Thiosulfat (S₂O₃²⁻), Sulfid (S²⁻) oder Hydrogensulfid (HS⁻).

4. Verfahren wie in einem der Ansprüche 2 oder 3 definiert, wobei das reduzierende wasserlösliche Salz Natriumbisulfit oder Kaliumbisulfit ist.

5. Verfahren wie in einem der Ansprüche 1 bis 4 definiert, wobei in Schritt (a) die Menge an Hydrogensulfit, die dem Wasser zugefügt wird, an die Sauerstoffkonzentration im Wasser angepasst wird.

6. Verfahren wie in einem der Ansprüche 1 bis 5 definiert, wobei in Schritt (a) die Menge an Hydrogensulfit, die dem Wasser zugefügt wird, an die Sauerstoffkonzentration in dem produzierten Acetylen angepasst wird.

7. Vorrichtung zur Produktion von Acetylen, die in der Lage ist, das Verfahren wie in einem der Ansprüche 1 bis 6 definiert, durchzuführen, umfassend mindestens einen Reaktor, in dem die Hydrolyse des Calciumcarbids ausgeführt wird, mindestens eine Leitung, die in der Lage ist, dem Reaktor Wasser zuzuführen und mindestens eine Leitung, die in der Lage ist, den Auslass des produzierten Acetylens aus dem Reaktor zu ermöglichen, mindestens einen Tank, der dazu dient, das reduzierende wasserlösliche Salz zu enthalten, mindestens ein Mittel, das in der Lage ist, das Salz zu dosieren und dem Wasser zuzuführen, das dazu dient, dem Reaktor oder den Reaktoren zugeführt zu werden, **dadurch gekennzeichnet, dass** sie außerdem stromaufwärts des oder der Tanks mindestens ein Mittel zur Bestimmung des Sauerstoffgehalts des zirkulierenden Kreislaufwassers umfasst.

8. Vorrichtung wie in Anspruch 7 definiert, **dadurch gekennzeichnet, dass** das oder die Mittel, die in der Lage sind, das reduzierende wasserlösliche Salz zu dosieren und dem Wasser zuzuführen, an das oder die Mittel zur Bestimmung des Sauerstoffgehalts des Wassers durch einen programmierbaren Automat gekoppelt ist oder sind.

9. Vorrichtung wie in einem der Ansprüche 7 oder 8 definiert, **dadurch gekennzeichnet, dass** es ebenfalls mindestens ein Mittel zur Bestimmung des Sauerstoffgehalts im Acetylen am Auslass des Reaktors umfasst.

10. Vorrichtung wie in Anspruch 9 definiert, **dadurch gekennzeichnet, dass** das oder die Mittel, die in der Lage sind, das reduzierende wasserlösliche Salz zu dosieren und dem Wasser zuzuführen, an das oder die Mittel zur Bestimmung des Sauerstoffgehalts des Acetylens durch einen programmierbaren Automat gekoppelt ist oder sind.
